# FASCICULE DE BREVET EUROPEEN

(11) **EP 4 072 221 B1**
(45) Date de publication et mention de la délivrance du brevet: **18.09.2024**
(21) Numéro de dépôt: 22160639.5
(22) Date de dépôt: 08.03.2022
(51) Int. Cl.: H04W 72/04

(54) **PROCÉDÉ ET DISPOSITIF D'ORCHESTRATION DE L'EXÉCUTION DE MÉCANISMES DANS UN RÉSEAU SANS FIL**
VERFAHREN UND VORRICHTUNG ZUM ORCHESTRIEREN DER AUSFÜHRUNG VON MECHANISMEN IN EINEM DRAHTLOSEN NETZWERK
METHOD AND DEVICE FOR ORCHESTRATING THE EXECUTION OF MECHANISMS IN A WIRELESS NETWORK

(30) Priorité: 07.04.2021 FR 2103542
(43) Date de publication de la demande: 12.10.2022
(73) Titulaire: Commissariat à l'énergie atomique et aux énergies alternatives, 75015 Paris (FR)
(72) Inventeur: MAMAN, Mickaël, 38054 GRENOBLE Cedex 09 (FR); CALVANESE STRINATI, Emilio, 38054 GRENOBLE Cedex 09 (FR); DINH, Ngoc-Lam, 38054 GRENOBLE Cedex 09 (FR)
(74) Mandataire: Atout PI Laplace

(56) Documents cités:
- US-A1- 2018 359 802
- US-A1- 2019 020 590

## Description

### Domaine technique

L'invention concerne de manière générale les réseaux sans fil et en particulier un procédé et un dispositif d'orchestration de l'exécution d'une pluralité de mécanismes par un ou plusieurs noeuds dans un réseau sans fil.

### Art antérieur

La cinquième génération (5G) de réseaux cellulaires sans fil est considérée comme une technologie révolutionnaire qui a le potentiel de transformer de nombreux secteurs industriels.

Un des objectifs majeurs des systèmes 5G est d'augmenter la capacité, la densité de connexion et la disponibilité des réseaux, tout en améliorant la fiabilité et en réduisant la latence.

La communication ultra-fiable et à faible latence (URLLC, acronyme pour 'Ultra-Reliable and Low-Latency Communication' en langue anglo-saxonne) représente une catégorie de services couverts par les systèmes 5G. Elle vise plus largement à prendre en charge les communications et les applications critiques, telles que l'automatisation industrielle, les réseaux intelligents, les soins de santé et la chirurgie à distance, la réalité augmentée, et les systèmes de transport intelligents.

Les communications URLLC imposent de nouvelles exigences, à savoir une contrainte de délai stricte et une fiabilité élevée, difficiles à satisfaire en particulier dans les scénarii de communication longue distance où les délais de propagation et de mise en file d'attente peuvent être très longs.

Les approches existantes relatives à la gestion de la latence dans les systèmes de communication sans fil peuvent être classées en deux catégories : les approches proactives et les approches réactives.

Les approches proactives sélectionnent des mécanismes de communication à mettre en oeuvre par les différents noeuds communicants dans un réseau sans fil en considérant les pires cas correspondant à des scénarii de transmission en présence de dégradation générant de mauvaises qualité de service et des mauvaises performances (par exemple en présence d'un canal de transmission très bruité ou présentant des interférences). Cela implique un coût élevé de communications ultra fiables car les dégradations et les pires cas peuvent être très rares.

Les approches réactives proposent d'activer des ressources supplémentaires d'une manière adaptative en fonction de la qualité du canal de transmission.

Des exemples de stratégies réactives sont décrits dans les demandes de brevets n° EP3621274 et n° EP1632096.

La demande de brevet n° EP3621274 divulgue une méthode de prévision de la qualité de service pour une communication entre au moins deux stations mobiles. Selon cette méthode de prévision, la sélection de la technologie radio et l'adaptation des paramètres de communication entre les stations mobiles se base sur une table de valeurs de qualité de service qui associe des paramètres de communication à des valeurs de qualité de service et des indicateurs sur la qualité du lien radio entre les stations mobiles communicantes.

La demande de brevet n° EP1632096 porte sur le contrôle de la diversité dans les réseaux de communication sans fil. Dans cette demande de brevet, la diversité des équipements utilisateurs sans fil est adaptée d'une façon réactive en fonction des indicateurs de la qualité du canal de transmission, du taux de transmission, du rapport signal-sur-bruit et des niveaux des batteries des équipements utilisateurs. La demande de brevet US2018359802 divulgue l'établissement d'une session dans un réseau 5g pouvant transmettre des messages ayant une QoS différente, la configuration de la session est modifiée si la QoS d'un message change.

De telles approches réactives basées sur la prédiction du canal de transmission pour l'adaptation des paramètres de transmission au sein d'un réseau de communication sans fil nécessitent des ressources et des délais de calcul importants, qui peuvent être limités dans des applications à temps réel ou dans des dispositifs à ressources limitées comme les réseaux de capteurs sans fils.

Il existe donc un besoin pour un procédé et un dispositif amélioré capable de réduire conjointement la latence et améliorer la fiabilité d'un réseau sans fil tout en maintenant une efficacité appropriée.

### Définition générale de l'invention

A cet effet, l'invention propose un procédé et un dispositif d'orchestration de l'exécution d'une pluralité de mécanismes par un ou plusieurs noeuds dans un réseau sans fil durant un délai d'exécution de stratégie d'orchestration de mécanismes. Le procédé d'orchestration de l'exécution d'une pluralité de mécanismes est caractérisé en ce que le procédé comprend les étapes consistant à :
- recevoir au moins une valeur cible d'indicateur de qualité de service ;
- déterminer une stratégie initiale d'orchestration de mécanismes définissant un nombre minimal de mécanismes et un nombre minimal de ressources par noeud ;
- exécuter ladite stratégie initiale d'orchestration de mécanismes par ledit un ou plusieurs noeuds ;
- recevoir des données de latence de bout-en-bout;
- déterminer une distribution statistique de la latence de bout-en-bout à partir desdites données ;
- déterminer un nombre de classes d'états du réseau en utilisant ladite distribution statistique de la latence de bout-en-bout ;
- déterminer un seuil temporel et un niveau de confiance en association avec chaque classe d'état du réseau à partir de ladite distribution statistique de la latence de bout-en-bout;
- déterminer une stratégie courante d'orchestration de mécanismes définissant une combinaison de de mécanismes et un nombre de ressources en association avec chaque noeud tenant compte dudit nombre de classes d'états du réseau et des seuils temporels associées auxdites classes d'états du réseau et en fonction dudit délai d'exécution de stratégie d'orchestration de mécanismes;
- exécuter ladite stratégie courante d'orchestration de mécanismes par ledit un ou plusieurs noeuds du réseau tenant compte du statut de communication de chaque noeud.

Selon certains modes de réalisation, la stratégie initiale d'orchestration de mécanismes peut être définie en fonction des valeurs cibles d'indicateurs de qualité de service reçues dudit un ou plusieurs noeuds dans le réseau sans fil.

Selon certains modes de réalisation, le délai d'exécution de stratégie d'orchestration de mécanismes peut être prédéfini en fonction de ladite au moins une valeur cible d'indicateur de qualité de service reçue par au moins un noeud dans ledit réseau sans fil.

Selon certains modes de réalisation, le nombre minimal de mécanismes peut comprendre au moins deux mécanismes.

Selon certains modes de réalisation, les données de latence peuvent être chargées d'une base de données historiques de latence de bout-en-bout.

Selon certains modes de réalisation, les données de latence peuvent correspondre à l'exécution passée d'au moins une stratégie d'orchestration.

Selon certains modes de réalisation, un seuil temporel peut représenter une estimation de la latence de bout-en-bout, le niveau de confiance associé à une classe d'états du réseau correspondant à l'intégration de la distribution statistique de la latence de bout-en-bout tenant compte du seuil temporel associé à ladite classe d'états du réseau.

Selon certains modes de réalisation, un mécanisme peut être associé à un délai d'exécution de mécanisme représentant le délai requis pour exécuter ledit mécanisme par un noeud dudit réseau sans fil, l'étape de détermination d'une stratégie courante d'orchestration de mécanismes comprenant l'estimation d'un temps restant d'exécution de mécanismes en fonction dudit délai d'exécution de stratégie d'orchestration de mécanismes, des délais d'exécutions de mécanismes et des statuts courants d'exécution de mécanismes.

Selon certains modes d'exécution de ladite stratégie courante d'orchestration de mécanismes par un noeud du réseau sans fil durant un délai inférieur à une valeur maximale de latence de bout-en-bout associée peut comprendre les étapes consistant à :
- déterminer une combinaison courante de mécanismes et un seuil temporel courant en fonction du statut courant de communication dudit noeud,
- exécuter ladite combinaison courante de mécanismes;
- déterminer une valeur courante de compteur de latence correspondant à l'exécution de la dite combinaison courante de mécanismes;
- comparer ladite valeur courante de compteur de latence audit seuil temporel courant ;
- comparer ledit seuil temporel courant à ladite valeur maximale de latence de bout-en-bout.

Selon certains modes de réalisation, la distribution statistique de latence de bout-en-bout peut être une distribution statistique multimodale.

Selon certains modes de réalisation, un indicateur de qualité de service peut être choisi dans un groupe comprenant la latence de bout-en-bout dans le réseau sans fil et une métrique de fiabilité.

Selon certains modes de réalisation, un mécanisme peut être associé à une ou plusieurs technique de diversité, une technique de diversité étant choisie dans un groupe comprenant des techniques de diversité temporelle, des techniques de diversité spatiale, des techniques de diversité fréquentielle, des techniques de sélection d'antenne émettrices et réceptrices, des techniques de sélection des technologies d'accès, et des techniques de traitement de signal comprenant des algorithmes et/ou protocoles de codage et modulation.

Selon certains modes de réalisation, un mécanisme peut être choisi parmi un groupe de mécanismes comprenant des mécanismes de déploiement et de contrôle dudit réseau sans fil, des mécanismes de contrôle et surveillance de ressources de communication utilisées dans ledit réseau sans fil, des mécanismes de synchronisation, des mécanismes de redondance comprenant des mécanismes de retransmission de données, des mécanismes de routage et de gestion des connectivités et de la mobilité dans ledit réseau sans fil, des mécanismes de stockage et de traitement de données, des mécanismes d'adaptation de la couche physique et de ses configurations, des mécanismes d'agilité en fréquence, des mécanismes liés à l'accès et de planification des ressources, des mécanismes de gestion de l'allocation de ressources, mécanismes de virtualisation des fonctionnalités du réseau et exploitant l'élasticité du réseau, et des mécanismes de sélection de trajets multiples.

Les modes de réalisation de l'invention fournissent en outre un dispositif d'orchestration de l'exécution d'une pluralité de mécanismes par un ou plusieurs noeuds dans un réseau sans fil durant un délai d'exécution de stratégie d'orchestration de mécanismes, caractérisé en ce que le dispositif d'orchestration de l'exécution d'une pluralité de mécanismes est configuré pour :
- recevoir au moins une valeur cible d'indicateur de qualité de service ;
- déterminer une stratégie initiale d'orchestration de mécanismes définissant un nombre minimal de mécanismes et un nombre minimal de ressources par noeud, ladite stratégie initiale d'orchestration de mécanismes étant exécutée par ledit un ou plusieurs noeuds ;
- recevoir des données de latence de bout-en-bout;
- déterminer une distribution statistique de la latence de bout-en-bout à partir desdites données ;
- déterminer un nombre de classes d'états du réseau en utilisant ladite distribution statistique de la latence de bout-en-bout ;
- déterminer un seuil temporel et un niveau de confiance en association avec chaque classe d'état du réseau à partir de ladite distribution statistique de la latence de bout-en-bout;
- déterminer une stratégie courante d'orchestration de mécanismes définissant un ensemble de combinaisons de mécanismes et un nombre de ressources en association avec chaque noeud tenant compte dudit nombre de classes d'états du réseau et des seuils temporels associées auxdites classes d'états du réseau et en fonction dudit délai d'exécution de stratégie d'orchestration de mécanismes, ladite stratégie courante d'orchestration de mécanismes étant exécutée par ledit un ou plusieurs noeuds du réseau.

Avantageusement, les modes de réalisation de l'invention permettent d'exploiter la distribution statistique de la latence de bout-en-bout pour l'activation dynamique de ressources et de mécanismes au fur et à mesure tout en répondant aux spécifications en termes de qualité de service des différents noeuds dans un réseau sans fil. L'activation dynamique permet, à la transmission de chaque nouveau paquet de données, de mettre à jour les statistiques utilisées par la stratégie d'orchestration de mécanismes et permet également de mettre à jour et affiner la stratégie d'orchestration de mécanismes pendant la transmission et les possibles retransmissions associées à un paquet transmis.

Les modes de réalisation de l'invention garantissent en outre une orchestration de l'exécution de mécanismes permettant d'atteindre un bon compromis entre la fiabilité, la latence, et l'efficacité dans un réseau sans fil.

Avantageusement, les modes de réalisation de l'invention fournissent une approche d'orchestration de mécanismes combinant une approche proactive et une approche réactive, l'approche proactive utilisant un minimum de ressources pour l'exécution d'un nombre minimal de mécanismes par les noeuds du réseau dans les cas les plus courants, et l'approche réactive est mise en oeuvre d'une façon dynamique, dans les cas restants, tenant compte la distribution statistique de la latence de bout-en-bout dans le réseau sans fil pour l'orchestration dans le temps du nombre et du temps d'exécution de mécanismes à activer tout en satisfaisant des spécifications cibles en termes de qualité de service. L'approche réactive est implémentée d'une manière dynamique au fil du temps, ce qui permet l'adaptation de chaque noeud du réseau sans fil aux conditions courantes de transmission, aux environnements dynamiques et aux conditions extrêmes plus rares.

Les modes de réalisation de l'invention permettent d'exploiter la distribution multimodale de la latence de bout-en-bout pour définir une stratégie globale d'orchestration dynamique de mécanismes et de ressources à utiliser pour l'exécution des mécanismes par les noeuds d'un réseau sans fil.

Les modes de réalisation de l'invention permettent également de combiner des techniques de diversité.

Avantageusement, les modes de réalisation de l'invention permettent de tenir compte de performances de bout-en-bout dans la gestion de différents mécanismes à exécuter dans un réseau sans fil et des ressources à utiliser pour l'exécution des mécanismes par les noeuds du réseau sans fil.

### Brève description des dessins

D'autres caractéristiques, détails et avantages de l'invention ressortiront à la lecture de la description faite en référence aux dessins annexés donnés à titre d'exemple et qui représentent, respectivement :
[Fig. 1] La figure 1 est un schéma représentant un réseau sans fil et un dispositif d'orchestration de l'exécution d'une pluralité de mécanismes dans le réseau sans fil, selon certains modes de réalisation de l'invention.
[Fig. 2] La figure 2 est un organigramme représentant un procédé d'orchestration de l'exécution d'une pluralité de mécanismes, selon certains modes de réalisation de l'invention.
[Fig. 3] La figure 3 est un organigramme représentant un procédé d'exécution d'une stratégie courante d'orchestration de mécanismes par un noeud du réseau, selon certains modes de réalisation de l'invention.
[Fig. 4] La figure 4 illustre des diagrammes représentant l'évolution de la densité de probabilité de la latence de bout en bout au cours du temps après ajout de seuils temporels dans la stratégie d'orchestration de mécanismes, selon certains modes de réalisation de l'invention.

### Description détaillée

Les modes de réalisation de l'invention fournissent un procédé et un dispositif d'orchestration de l'exécution d'une pluralité de mécanismes par un ou plusieurs noeuds dans un réseau sans fil durant un délai d'exécution de stratégie d'orchestration de mécanismes.

Un mécanisme selon les modes de réalisation de l'invention est un mécanisme de transmission mis en oeuvre par un noeud communicant dans un réseau sans fil.

Selon certains modes de réalisation, un mécanisme peut être choisi parmi un groupe de mécanismes comprenant des mécanismes de déploiement et de contrôle du réseau sans fil, des mécanismes d'adaptation de la couche physique et de ses configurations, des mécanismes d'agilité en fréquence, des mécanismes liés à l'accès et de planification des ressources, des mécanismes de gestion de l'allocation de ressources, des mécanismes de contrôle et surveillance de ressources de communication utilisées dans le réseau sans fil, des mécanismes de synchronisation, des mécanismes de redondance comme la retransmission de données, des mécanismes de routage et de gestion des connectivités et de la mobilité dans le réseau sans fil, des mécanismes de stockage et de traitement de données, des mécanismes de virtualisation des fonctionnalités du réseau et exploitant l'élasticité du réseau (par exemples des mécanismes pour l'ajout de matériel dans l'infrastructure comme l'ajout d'un relai, l'ajout d'une antenne pour la communication, et l'ajout d'une entité de calcul pour le traitement des données) et des mécanismes de sélection de trajets multiples.

Dans un mode de réalisation de l'invention, un mécanisme peut être associé à une ou plusieurs techniques de diversité.

Dans des modes de réalisation, une technique de diversité peut être choisie dans un groupe comprenant des techniques de diversité temporelle, des techniques de diversité spatiale, des techniques de diversité fréquentielle, des techniques de sélection d'antenne émettrices et/ou réceptrices, des techniques de sélection des technologies d'accès, et des techniques de traitement de signal comprenant des algorithmes et/ou protocoles de codage et modulation.

Une stratégie d'orchestration de mécanismes selon les modes de réalisation de l'invention désigne une stratégie à adopter dans le réseau sans fil. Elle définit un ensemble de seuils temporels, de combinaisons de mécanismes et de niveaux de confiances, les mécanismes étant exécutés par les noeuds opérationnels dans le réseau sans fil en utilisant des ressources adéquates pour atteindre les spécifications en termes de qualité de service.

Un indicateur de qualité de service selon les modes de réalisation de l'invention peut être choisi dans un groupe comprenant la latence de bout-en-bout, un indicateur de fiabilité, et un indicateur d'efficacité.

La latence de bout-en-bout selon les modes de réalisation de l'invention peut comprendre des délais de propagation, de traitement et de mise en file d'attente des données associées à la transmission de bout-en-bout de signaux d'un noeud source à un noeud destination communicant dans le réseau sans fil.

La caractérisation de la latence de bout-en-bout selon les modes de réalisation de l'invention est basée sur une modélisation probabiliste.

Selon certains modes de réalisation de l'invention, la distribution statistique de latence de bout-en-bout peut être une distribution statistique multimodale.

Une classe d'états du réseau selon les modes de réalisation de l'invention désigne un groupe d'états ou de types de situation ou scénarii de transmission associés à un contexte de transmission spécifique (par exemple la topologie du réseau, la date, l'horaire, la dégradation du canal de transmission, etc.) et/ou à des conditions de transmission spécifiques.

Un seuil temporel selon les modes de réalisation de l'invention représente une estimation de la latence de bout-en-bout et est associé à une classe d'états du réseau.

Un niveau de confiance associé à une classe d'états du réseau selon les modes de réalisation de l'invention correspond à l'intégration de la distribution statistique de la latence de bout-en-bout tenant compte du seuil temporel associé à la classe d'états du réseau.

Selon certains modes de réalisation, une ressource peut être une ressource temporelle et/ou une ressource fréquentielle et/ou une ressource matérielle et/ou une ressource spatiale et/ou une ressource virtuelle comme une machine virtuelle ou un conteneur.

Les modes de réalisation de l'invention peuvent être utilisés dans diverses applications, tels que par exemple et sans limitation les réseaux intelligents, les soins de santé et la chirurgie à distance, la réalité augmentée, et les systèmes de transport intelligents.

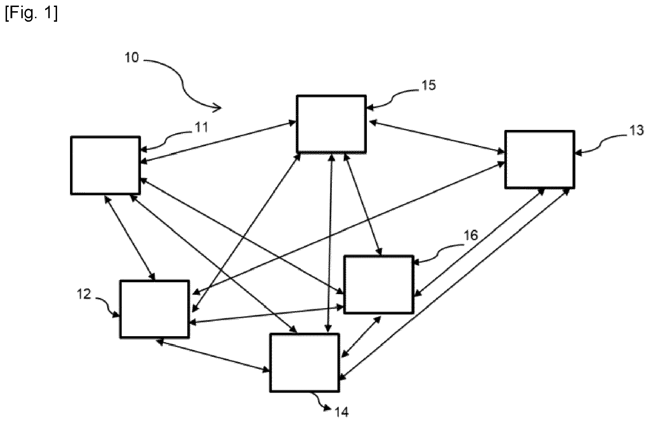

La figure 1 représente un dispositif 15 d'orchestration de l'exécution d'une pluralité de mécanismes par un ou plusieurs noeuds dans un réseau sans fil 10 durant un délai d'exécution de stratégie d'orchestration de mécanismes, selon certains modes de réalisation. Un noeud opérationnel dans le réseau sans fil 10 est muni d'un émetteur et d'un récepteur. Un noeud opérationnel peut être un dispositif, un appareil, ou un objet configuré pour opérer dans un réseau sans fil. Le dispositif 15 peut être implémenté ou faire partie (logicielle ou matérielle) d'un système de gestion du réseau sans fil 10, par exemple au niveau d'une station relai ou une station de base.

Selon certains modes de réalisation, le réseau sans fil 10 peut être un réseau de transmission, de communication, ou de collecte de données dans lequel au moins un noeud 11 est configuré pour échanger un flux de données avec au moins un noeud 13. Les noeuds du réseau sans fil 10 peuvent en outre être configurés pour communiquer avec un serveur d'application. Le réseau sans fil 10 peut être un réseau à sauts multiples, les transmissions entre deux noeuds se faisant en utilisant d'autres noeuds comme relais. Un exemple d'une transmission à sauts multiples entre un noeud source 11 et un noeud destination 13 est illustré à travers la figure 1, les noeuds 11 et 13 communicants en utilisant les noeuds 12, 14 et 16 comme relais.

Le réseau sans fil 10 peut être tout type de réseau ad-hoc sans fil sans infrastructure dans lequel un ou plusieurs noeuds peuvent être fixes ou mobiles. Le réseau sans fil 10 peut être par exemple et sans limitation :
- un réseau personnel ('Personal Area Network' en langue anglo-saxonne) utilisant une technologie sans fil comme le Bluetooth, l'infrarouge ou le Zigbee ;
- un réseau poste à poste (Peer to Peer en langue anglo-saxonne) ;
- un réseau de capteurs dans lequel les noeuds détiennent des capteurs embarqués configurés pour capter des grandeurs physiques (par exemple la chaleur, l'humidité, la vibration, ect.) et les transformer en grandeur numérique, ou
- un réseau véhiculaire (en application par exemple aux systèmes de transport intelligents) dans lequel les véhicules (ambulances, particuliers, voitures des pompiers) communiquent entre elles.

Selon certains modes de réalisation, le réseau sans fil 10 peut être un réseau d'objets connectés de type Internet des objets (`Internet of Things' en langue anglo-saxonne) ou de type machine-à-machine ('Machine-to-Machine' en langue anglo-saxonne ou M2M) dans lequel les noeuds correspondent à des objets ou des dispositifs dotés de moyens de communications. Un tel réseau sans fil 10 peut être utilisé dans diverses applications grand public, commerciales, industrielles et d'infrastructure.

Des exemples d'applications comprennent les véhicules connectés (Internet des véhicules IoV et V2X), la domotique/maison intelligente, les villes intelligentes, la technologie portable et la santé connectée.

Des exemples d'applications commerciales comprennent le domaine médical et le transport. En médecine, un système de soins de santé numérisé reliant les ressources médicales et les services de soins de santé peut être utilisé dans lequel des moniteurs et des capteurs spéciaux sont utilisés pour permettre la surveillance de la santé à distance et la notification des urgences. Dans les systèmes de transport, l'Internet des Objets utilisant par exemple de capteurs sans fil, peut assurer l'interaction entre les véhicules et l'infrastructure, ainsi que les communications inter et intra-véhicules, le contrôle intelligent de la circulation, le stationnement intelligent, la sécurité et l'assistance routière.

Des exemples d'applications industrielles comprennent, sans limitation, des applications dans l'agriculture, par exemple en utilisant des capteurs pour recueillir des données sur la température, les précipitations, l'humidité, la vitesse du vent et le contenu du sol.

Des exemples d'applications d'infrastructure comprennent, sans limitation, des applications IoT (Internet des Objets) pour assurer la surveillance et le contrôle des opérations des infrastructures urbaines et rurales telles que les ponts et les voies ferrées.

Selon certains modes de réalisation, un noeud compris dans le réseau sans fil 10 peut être un dispositif standard configuré pour opérer dans un réseau mobile ad-hoc tel que, par exemples non limitatifs, les ordinateurs portables, les téléphones portables intelligents (smartphones), et les tablettes.

Dans une application de l'invention aux réseaux de types Internet des Objets ou M2M, un noeud compris dans le réseau sans fil 10 peut être un appareil IoT ou M2M communicant tel que les appareils médicaux, les moniteurs de température et de météo, les cartes connectées, les compteurs intelligents, les consoles de jeux, les assistants numériques personnels, les moniteurs de santé et de fitness, les lampes, thermostats, portes de garage, dispositifs de sécurité, drones, vêtements intelligents, appareils e-santé, robots. Un appareil IoT/M2M peut être tout appareil physique, véhicule, appareil électroménager ou objet embarqué permettant une connexion sans fil ad-hoc pour la collecte et l'échange de données. Un capteur est un dispositif sensoriel (p. ex. un transducteur) apte à mesurer des caractéristiques telles que la température, l'humidité/humidité, l'acoustique, le son, les vibrations, la force/la charge/la déformation/la pression, la lumière ambiante et la position/la présence/l'accessibilité, etc.

Selon certains modes de réalisation, un noeud peut être équipé d'une ou plusieurs antennes émettrices et/ou d'une ou plusieurs antennes réceptrices. Dans un exemple d'application de l'invention aux systèmes à antennes multiples, des techniques de codage espace-temps peuvent être mises en oeuvres pour coder les informations échanger et augmenter la diversité spatio-temporelle.

Un noeud opérationnel dans le réseau sans fil peut être fixe ou mobiles et/ou peut être surveillé et/ou commandé à distance. Un noeud peut être équipé de sources d'énergie qui alimentent les différents composants assurant le fonctionnement de ce dispositif (par exemple, des batteries sèches, des cellules solaires et des piles à combustible).

Le dispositif 15 d'orchestration de l'exécution d'une pluralité de mécanismes par au moins un noeud (par exemple le noeud 11) dans le réseau sans fil 10 définit dynamiquement un ou plusieurs seuils basés sur la distribution de la latence de bout-en-bout dans le réseau sans fil 10 afin de réaliser un compromis entre latence de bout-en-bout, fiabilité et efficacité.

Dans des modes de réalisation de l'invention, le dispositif 15 d'orchestration de l'exécution de mécanismes est configuré pour recevoir de chaque noeud dans le réseau sans fil 10 au moins une valeur cible d'indicateur de qualité de service. Une valeur cible d'indicateur de qualité de service peut être une valeur maximale de latence de bout-en-bout et/ou une valeur minimale d'un indicateur de fiabilité et/ou une valeur minimale d'un indicateur d'efficacité du réseau sans fil 10.

A partir des valeurs cibles d'indicateurs de qualité de service reçues des noeuds opérationnels dans le réseau sans fil 10, le dispositif 15 d'orchestration de l'exécution de mécanismes est configuré pour déterminer une stratégie initiale d'orchestration de mécanismes définissant un nombre minimal de mécanismes et un nombre minimal de ressources par noeud, la stratégie initiale d'orchestration de mécanismes étant exécutée par l'un ou plusieurs noeuds opérationnels dans le réseau sans fil 10 et ayant envoyé leurs valeurs cibles d'indicateurs de qualité de service au dispositif 15. La stratégie initiale d'orchestration de mécanismes permet de garantir des performances minimales à chaque noeud dans le réseau sans fil 10 tout en utilisant des ressources minimales afin de ne pas gaspiller les ressources disponibles au niveau de chaque noeud.

Selon certains modes de réalisation, le nombre minimal de mécanismes peut comprendre au moins deux mécanismes.

A la suite de l'exécution de la stratégie initiale d'orchestration de mécanismes, le dispositif 15 d'orchestration de l'exécution de mécanismes est configuré pour recevoir des données de latence de bout-en-bout.

Les données de latence peuvent être des données historiques de latence de bout-en-bout préalablement sauvegardées dans une base de données de latence de bout-en-bout. La base de données peut être implémentée dans le dispositif 15 d'orchestration de l'exécution de mécanismes ou dans un autre dispositif ou serveur dans le réseau sans fil 10.

Dans des modes de réalisation, les données de latence peuvent correspondre à l'exécution passée d'au moins une stratégie d'orchestration de l'exécution de mécanismes, par exemple la stratégie initiale d'orchestration de l'exécution de mécanismes.

Selon certains modes de réalisation, le dispositif 15 d'orchestration de l'exécution de mécanismes est configuré pour déterminer une distribution statistique de latence de bout-en-bout à partir des données de latence reçues. Le dispositif 15 d'orchestration de l'exécution de mécanismes permet de déterminer quand davantage de ressources de communications et de mécanismes à exécuter par au moins un noeud dans le réseau sans fil 10 doivent être activés, ce qui permet de réaliser un compromis optimisé entre les approches réactives et proactive en exploitant la distribution statistique de la latence de bout-en-bout.

A cet égard, le dispositif 15 d'orchestration de l'exécution de mécanismes est configuré pour déterminer un nombre de classes d'états du réseau en utilisant la distribution statistique de la latence de bout-en-bout déterminée. La classification d'états du réseau permet de différencier les états faciles à traiter et les états à risque. Le dispositif 15 d'orchestration apprend et différencie à la volée les différents états. Les états faciles peuvent être résolus en utilisant un nombre limité de ressources. Les états à risque sont rares et peuvent nécessiter de nombreuses ressources. La classification des états permet de diminuer le temps de latence par rapport à une approche proactive, en attendant que les états faciles à traiter se présentent, puis en augmentant le niveau de confiance que les cas à risque se présentent. Le dispositif 15 d'orchestration de l'exécution de mécanismes a avantageusement un mode de fonctionnement efficace. Il permet de limiter le gaspillage de ressources tout en améliorant les performances globales du réseau sans fil 10.

Afin de réaliser un meilleur compromis latence-fiabilité-efficacité, le dispositif 15 d'orchestration de l'exécution de mécanismes est configuré pour programmer dans le temps une combinaison de mécanismes à exécuter par les différents noeuds dans le réseau sans fil 10 en exploitant la distribution fine de la latence de bout-en-bout et la classification des états du réseau. Ainsi, le dispositif 15 d'orchestration de l'exécution de mécanismes est configuré pour déterminer un seuil temporel et un niveau de confiance en association avec chaque classe d'états du réseau à partir de la distribution statistique de la latence de bout-en-bout. La modélisation probabiliste de la latence de bout-en-bout permet ainsi de déterminer des niveaux de confiance pour des latences attendues qui correspondent aux seuils temporels déterminés en association avec chaque classe d'états.

La programmation dans le temps de la combinaison de mécanismes à exécuter consiste à déterminer une stratégie courante d'orchestration de mécanismes. La stratégie courante d'orchestration de mécanismes définit un nombre de mécanismes et un nombre de ressources en association avec chaque noeud. Le dispositif 15 d'orchestration de l'exécution de mécanismes détermine une stratégie courante d'exécution de mécanismes durant le délai d'exécution de stratégie d'orchestration de mécanismes en tenant compte du nombre de classes d'états du réseau et des seuils temporels associées aux classes d'états du réseau et en fonction du délai d'exécution de stratégie d'orchestration de mécanismes. La stratégie courante d'orchestration de mécanismes est par la suite exécutée par l'un ou plusieurs noeuds du réseau sans fil 10, chaque noeud étant configuré pour exécuter le nombre de mécanismes lui est associé par la stratégie courante d'orchestration de mécanismes en utilisant les ressources spécifiées également dans la stratégie courante d'orchestration de mécanismes, en fonction de ses spécifications ou valeurs requises/cibles d'indicateurs de qualité de service et de son statut de communication.

Selon certains modes de réalisation, un noeud du réseau sans fil 10 peut être configuré pour exécuter la stratégie courante d'orchestration de mécanismes durant un délai inférieur à une valeur maximale de latence de bout-en-bout associée audit noeud. Pour exécuter la stratégie courante d'orchestration de mécanismes avant l'expiration de la valeur maximale autorisée de latence de bout-en-bout, le noeud du réseau sans fil 10 peut être configuré pour :
- déterminer au moins un mécanisme courant et un seuil temporel courant en fonction de son statut courant de communication. Le noeud du réseau sans fil 10 peut être configuré pour sélectionner ledit au moins un mécanisme courant et ledit seuil temporel courant parmi le nombre de mécanismes et le nombre de ressources définis par la stratégie courante d'orchestration de mécanismes en association avec ledit noeud du réseau sans fil 10 ;
- exécuter l'au moins un mécanisme courant ;
- déterminer une valeur courante de compteur de latence associée à la transmission de donnée correspondant à l'exécution dudit au moins un mécanisme courant;
- comparer la valeur courante de compteur de latence au seuil temporel courant et à la valeur maximale de latence de bout-en-bout associée au noeud.
- mettre à jour la valeur du seuil courant et la sélection d'au moins un mécanisme courant si la valeur courante de compteur de latence est supérieure au seuil temporel courant et est inférieure à la valeur maximale de latence de bout-en-bout associée au noeud. Le noeud implémente ainsi une approche incrémentale, une fois un seuil temporel est passé, une mise à jour du nombre de mécanismes, de mécanismes, et de ressources canal utilisées peut être effectuée.

Selon certains modes de réalisation, le noeud peut être configuré pour appliquer un schéma de diversité complémentaire en fonction de l'état actuel de communication.

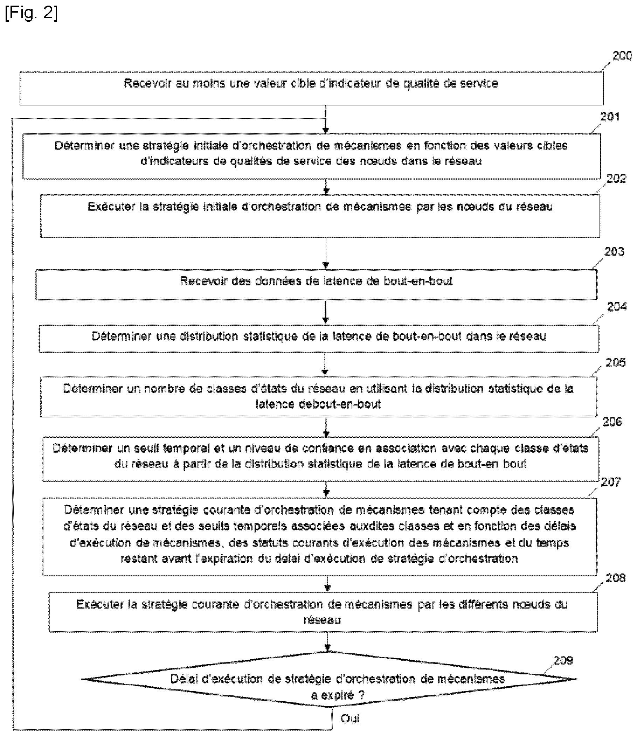

La figure 2 illustre le procédé d'orchestration de l'exécution d'une pluralité de mécanismes par un ou plusieurs noeuds dans un réseau sans fil durant un délai d'exécution de stratégie d'orchestration de mécanismes.

Selon certains modes de réalisation, le délai d'exécution de stratégie d'orchestration de mécanismes peut dépendre des spécifications en termes de qualité de service requises par l'un ou plusieurs noeuds dans le réseau sans fil. Le procédé permet de définir dynamiquement un ou plusieurs seuils basés sur la distribution de la latence de bout-en-bout dans le réseau sans fil afin de réaliser un compromis entre latence de bout-en-bout, fiabilité et efficacité.

A l'étape 200, au moins une valeur cible d'indicateur de qualité de service est reçue d'un ou plusieurs noeuds dans le réseau sans fil. Une valeur cible d'indicateur de qualité de service peut être une valeur maximale de latence de bout-en-bout et/ou une valeur minimale d'un indicateur de fiabilité et/ou une valeur minimale d'un indicateur d'efficacité du réseau sans fil. La valeur cible de latence de bout-en-bout est utilisée comme seuil temporel final, l'objectif étant que toutes les transmissions dans le réseau sans fil s'exécutent avant ce seuil temporel final.

A l'étape 201, une stratégie initiale d'orchestration de mécanismes définissant un nombre minimal de mécanismes et un nombre minimal de ressources par noeud peut être déterminée. La stratégie initiale d'orchestration de mécanismes permet de garantir des performances minimales à chaque noeud dans le réseau sans fil tout en utilisant des ressources minimales.

Selon certains modes de réalisation, le nombre minimal de mécanismes peut comprendre au moins deux mécanismes.

Selon certains modes de réalisation, la stratégie initiale d'orchestration de mécanismes peut être définie en fonction des valeurs cibles d'indicateurs de qualité de service reçues de l'un ou plusieurs noeuds dans le réseau sans fil.

A l'étape 202, la stratégie initiale d'orchestration de mécanismes peut être exécutée par l'un ou plusieurs noeuds. La stratégie initiale d'orchestration de mécanismes est la stratégie d'orchestration la plus efficace à mettre en oeuvre et sert à définir une première classe d'états du réseau.

A l'étape 203, des données de latence de bout-en-bout peuvent être reçues.

Selon certains modes de réalisation, les données de latence peuvent être des données historiques de latence de bout-en-bout préalablement sauvegardées dans une base de données de latence de bout-en-bout.

Selon d'autres modes de réalisation, les données de latence peuvent correspondre à l'exécution passée d'au moins une stratégie d'orchestration de l'exécution de mécanismes, par exemple la stratégie initiale d'orchestration de l'exécution de mécanismes une fois la stratégie initiale d'orchestration exécutée.

A l'étape 204, une distribution statistique de la latence de bout-en-bout peut être déterminée à partir des données de latence de bout-en-bout reçues à l'étape 203.

A l'étape 205, un nombre de classes d'états du réseau peut être déterminé en utilisant la distribution statistique de la latence de bout-en-bout. L'étape 205 peut comprendre la classification des sources de déficience avec un certain niveau de confiance.

Le procédé d'orchestration de l'exécution de mécanismes permet de programmer les mécanismes et l'utilisation de ressources dans le temps en déterminant le nombre et le temps d'exécution de décisions intermédiaires correspondant à un nombre et valeurs de seuils temporels. En association avec chaque classe d'états du réseau, un seuil temporel et un niveau de confiance peuvent être déterminés à l'étape 206 à partir de la distribution statistique de la latence de bout-en-bout, ce qui permet de définir quand agir et quand appliquer une décision donnée. Le procédé offre ainsi une prédiction des décisions à mettre en oeuvre dans le réseau sans fil avec un niveau de confiance et d'anticiper le nombre de décision à prendre et les délais pour leur mise en oeuvre et l'exécution de mécanismes en exploitant une distribution fine de la latence de bout-en-bout

A l'étape 207, une stratégie courante d'orchestration de mécanismes définissant un nombre de mécanismes et un nombre de ressources en association avec chaque noeud peut être déterminée tenant compte du nombre de classes d'états du réseau et des seuils temporels associées auxdites classes d'états du réseau et en fonction du délai d'exécution de stratégie d'orchestration de mécanismes.

Selon certains modes de réalisation, un mécanisme peut être associé à un délai d'exécution de mécanisme représentant le délai requis pour exécuter ledit mécanisme par un noeud du réseau sans fil, l'étape 207 peut comprendre l'estimation d'un temps restant d'exécution de mécanismes en fonction du délai d'exécution de stratégie d'orchestration de mécanismes, des délais d'exécutions de mécanismes et des statuts courants d'exécution de mécanismes.

A l'étape 208, la stratégie courante d'orchestration de mécanismes peut être exécutée par l'un ou plusieurs noeuds du réseau sans fil tenant compte du statut de communication de chaque noeud.

A l'étape 209, il est déterminé si le délai d'exécution de stratégie d'orchestration de mécanismes a expiré. S'il est déterminé à l'étape 209 que le délai d'exécution de stratégie d'orchestration de mécanismes a expiré, le procédé recommence à l'étape 201.

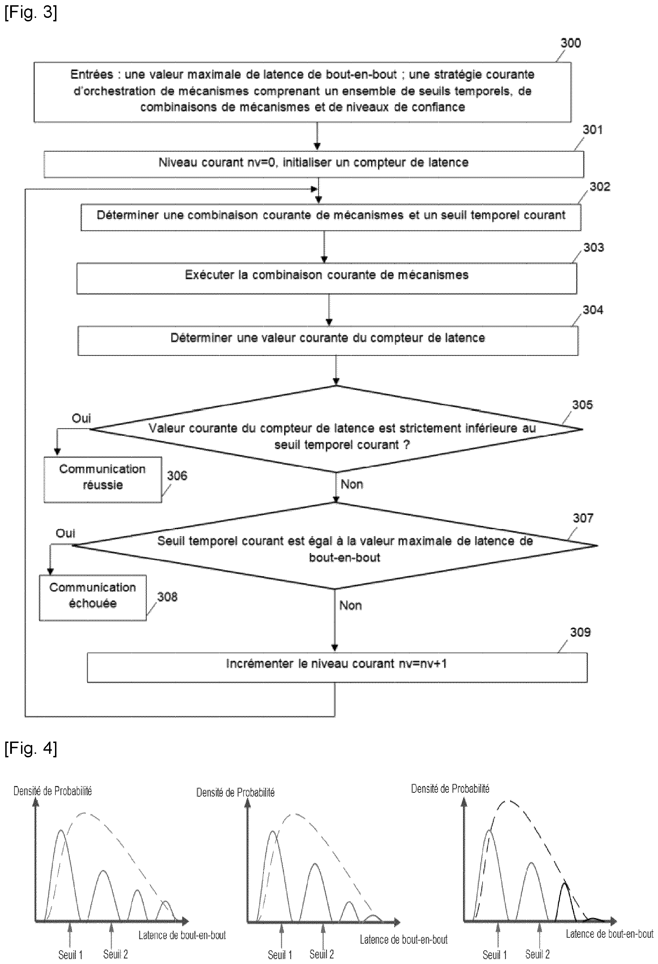

La figure 3 est un organigramme représentant un procédé d'exécution d'une stratégie courante d'orchestration de mécanisme par un noeud du réseau durant un délai inférieur à une valeur maximale de latence de bout-en-bout associée audit noeud, correspondant à l'étape 209 du procédé illustré à la figure 2.

A l'étape 300, les entrées comprenant une valeur maximale de latence de bout-en-bout, une stratégie courante d'orchestration de mécanismes définissant un ensemble de combinaisons de mécanismes de seuils temporels et de niveaux de confiance peut être reçue.

A l'étape 301, un niveau courant peut être initialisé à la valeur zéro tel que nv=0 et un compteur de latence évaluant la latence de bout-en-bout peut être initalisé.

A l'étape 302, une combinaison courante de mécanismes et un seuil temporel courant peuvent être déterminés, le seuil temporel courant défini le passage au niveau suivant.

A l'étape 303, la combinaison courante de mécanismes peut être exécutée. L'exécution de la combinaison courante de mécanismes revient à activer et exécuter les mécanismes sélectionnés dans le niveau courant.

A l'étape 304, une valeur courante du compteur de latence correspondant à l'exécution de la combinaison courante de mécanismes peut être déterminée.

A l'étape 305, la valeur courante du compteur de latence peut être comparée au seuil temporel courant. S'il est déterminé que la valeur courante du compteur de latence est strictement inférieure au seuil temporel courant, la communication est réussie à l'étape 306. A l'étape 306, le compteur de latence s'arrête et sa valeur peut être injectée dans la distribution statistique en valeur de latence de bout-en-bout. S'il est déterminé à l'étape 305 que la valeur courante du compteur de latence est égale au seuil temporel courant, l'étape 307 peut être exécutée pour comparer la valeur du seuil temporel courant à la valeur maximale de latence de bout-en-bout. S'il est déterminé à l'étape 307 que la valeur du seuil temporel courant est égale à la valeur maximale de latence de bout-en-bout, la communication a échoué et l'étape 308 peut être exécutée. S'il est déterminé à l'étape 307 que le seuil temporel courant est strictement inférieur à la valeur maximale de latence de bout-en-bout, l'étape 309 peut être exécutée pour mettre à jour le niveau courant nv=nv+1 et le procédé poursuit à l'étape 302.

L'étape 303 d'exécution de la combinaison courante de mécanismes peut comprendre l'application d'une technique de diversité complémentaire en fonction de l'état actuel de communication.

La figure 4 montre l'évolution de la densité de probabilité de la latence de bout en bout au cours du temps après ajout d'étapes intermédiaires dans la stratégie d'orchestration de mécanismes. Si une statistique sur la latence de bout-en-bout est disponible, des seuils peuvent être déterminés dès le début en se basant sur une connaissance à priori. Cela peut être la statistique lorsque la combinaison initiale est choisie. Le fait d'ajouter une étape au seuil 1 où on rajoute des mécanismes à la combinaison en cours, cela impactera les performances du système (latence de bout-en-bout). Par exemple une partie des cas qui aurait dû intervenir dans la quatrième classe d'états du réseau (aussi appelés `clusters') interviendront avant. La troisième étape est la modification des performances suite à l'ajout des mécanismes après le seuil 2. Cela peut réduire encore plus fortement le 4^{ème} cluster.

Les modes de réalisation de l'invention peuvent être mis en oeuvre par divers moyens, par exemple par du matériel ('hardware'), des logiciels, ou une combinaison de ceux-ci.

En général les routines exécutées pour mettre en oeuvre les modes de réalisation de l'invention, qu'elles soient mises en oeuvre dans le cadre d'un système d'exploitation ou d'une application spécifique, d'un composant, d'un programme, d'un objet, d'un module ou d'une séquence d'instructions, ou même d'un sous-ensemble de ceux-là, peuvent être désignées comme "code de programme informatique" ou simplement "code de programme". Le code de programme comprend typiquement des instructions lisibles par ordinateur qui résident à divers moments dans des dispositifs divers de mémoire et de stockage dans un ordinateur et qui, lorsqu'elles sont lues et exécutées par un ou plusieurs processeurs dans un ordinateur, amènent l'ordinateur à effectuer les opérations nécessaires pour exécuter les opérations et/ou les éléments propres aux aspects variés des modes de réalisation de l'invention. Les instructions d'un programme, lisibles par ordinateur, pour réaliser les opérations des modes de réalisation de l'invention peuvent être, par exemple, le langage d'assemblage, ou encore un code source ou un code objet écrit en combinaison avec un ou plusieurs langages de programmation.

## Revendications

1. Procédé d'orchestration de l'exécution d'une pluralité de mécanismes par un ou plusieurs noeuds dans un réseau sans fil durant un délai d'exécution de stratégie d'orchestration de mécanismes, **caractérisé en ce que** le procédé comprend les étapes consistant à :
- recevoir (200) au moins une valeur cible d'indicateur de qualité de service ;
- déterminer (201) une stratégie initiale d'orchestration de mécanismes définissant un nombre minimal de mécanismes et un nombre minimal de ressources par noeud ;
- exécuter (202) ladite stratégie initiale d'orchestration de mécanismes par ledit un ou plusieurs noeuds ;
- recevoir (203) des données de latence de bout-en-bout;
- déterminer (204) une distribution statistique de la latence de bout-en-bout à partir desdites données ;
- déterminer (205) un nombre de classes d'états du réseau en utilisant ladite distribution statistique de la latence de bout-en-bout ;
- déterminer (206) un seuil temporel et un niveau de confiance en association avec chaque classe d'état du réseau à partir de ladite distribution statistique de la latence de bout-en-bout;
- déterminer (207) une stratégie courante d'orchestration de mécanismes définissant une combinaison de de mécanismes et un nombre de ressources en association avec chaque noeud tenant compte dudit nombre de classes d'états du réseau et des seuils temporels associées auxdites classes d'états du réseau et en fonction dudit délai d'exécution de stratégie d'orchestration de mécanismes;
- exécuter (209) ladite stratégie courante d'orchestration de mécanismes par ledit un ou plusieurs noeuds du réseau tenant compte du statut de communication de chaque noeud.

2. Procédé selon la revendication 1, **caractérisé en ce que** ladite stratégie initiale d'orchestration de mécanismes est définie en fonction des valeurs cibles d'indicateurs de qualité de service reçues dudit un ou plusieurs noeuds dans le réseau sans fil.

3. Procédé selon l'une quelconque des revendications précédentes, **caractérisé en ce que** ledit délai d'exécution de stratégie d'orchestration de mécanismes est prédéfini en fonction de ladite au moins une valeur cible d'indicateur de qualité de service reçue par au moins un noeud dans ledit réseau sans fil.

4. Procédé selon l'une quelconque des revendications précédentes, **caractérisé en ce que** ledit nombre minimal de mécanismes comprend au moins deux mécanismes.

5. Procédé selon l'une quelconque des revendications précédentes, **caractérisé en ce que** lesdites données de latence sont chargées d'une base de données historiques de latence de bout-en-bout.

6. Procédé selon l'une quelconque des revendications 1 à 4, **caractérisé en ce que** lesdites données de latence correspondent à l'exécution passée d'au moins une stratégie d'orchestration.

7. Procédé selon l'une quelconque des revendications précédentes, **caractérisé en ce qu'**un seuil temporel représente une estimation de la latence de bout-en-bout, le niveau de confiance associé à une classe d'états du réseau correspondant à l'intégration de la distribution statistique de la latence de bout-en-bout tenant compte du seuil temporel associé à ladite classe d'états du réseau.

8. Procédé selon l'une quelconque des revendications précédentes, **caractérisé en ce qu'**un mécanisme est associé à un délai d'exécution de mécanisme représentant le délai requis pour exécuter ledit mécanisme par un noeud dudit réseau sans fil, l'étape (207) de détermination d'une stratégie courante d'orchestration de mécanismes comprenant l'estimation d'un temps restant d'exécution de mécanismes en fonction dudit délai d'exécution de stratégie d'orchestration de mécanismes, des délais d'exécutions de mécanismes et des statuts courants d'exécution de mécanismes.

9. Procédé selon l'une quelconque des revendications précédentes, **caractérisé en ce que** l'étape (210) d'exécution de ladite stratégie courante d'orchestration de mécanismes par un noeud dudit réseau sans fil durant un délai inférieur à une valeur maximale de latence de bout-en-bout associée audit noeud comprend les étapes consistant à :
- déterminer (302) une combinaison courante de mécanismes et un seuil temporel courant en fonction du statut courant de communication dudit noeud,
- exécuter (303) ladite combinaison courante de mécanismes;
- déterminer (304) une valeur courante de compteur de latence correspondant à l'exécution de la dite combinaison courante de mécanismes;
- comparer (305) ladite valeur courante de compteur de latence audit seuil temporel courant ;
- comparer (307) ledit seuil temporel courant à ladite valeur maximale de latence de bout-en-bout.

10. Procédé selon l'une quelconque des revendications précédentes, **caractérisé en ce que** ladite distribution statistique de latence de bout-en-bout est une distribution statistique multimodale.

11. Procédé selon l'une quelconque des revendications précédentes, **caractérisé en ce qu'**un indicateur de qualité de service est choisi dans un groupe comprenant la latence de bout-en-bout dans le réseau sans fil et une métrique de fiabilité.

12. Procédé selon l'une quelconque des revendications précédentes, **caractérisé en ce qu'**un mécanisme est associé à une ou plusieurs technique de diversité, une technique de diversité étant choisie dans un groupe comprenant des techniques de diversité temporelle, des techniques de diversité spatiale, des techniques de diversité fréquentielle, des techniques de sélection d'antenne émettrices et réceptrices, des techniques de sélection des technologies d'accès, et des techniques de traitement de signal comprenant des algorithmes et/ou protocoles de codage et modulation.

13. Procédé selon l'une quelconque des revendications précédentes, **caractérisé en ce qu'**un mécanisme est choisi parmi un groupe de mécanismes comprenant des mécanismes de déploiement et de contrôle dudit réseau sans fil, des mécanismes de contrôle et surveillance de ressources de communication utilisées dans ledit réseau sans fil, des mécanismes de synchronisation, des mécanismes de redondance comprenant des mécanismes de retransmission de données, des mécanismes de routage et de gestion des connectivités et de la mobilité dans ledit réseau sans fil, des mécanismes de stockage et de traitement de données, des mécanismes d'adaptation de la couche physique et de ses configurations, des mécanismes d'agilité en fréquence, des mécanismes liés à l'accès et de planification des ressources, des mécanismes de gestion de l'allocation de ressources, mécanismes de virtualisation des fonctionnalités du réseau et exploitant l'élasticité du réseau, et des mécanismes de sélection de trajets multiples.

14. Dispositif d'orchestration de l'exécution d'une pluralité de mécanismes par un ou plusieurs noeuds dans un réseau sans fil durant un délai d'exécution de stratégie d'orchestration de mécanismes, **caractérisé en ce que** le dispositif d'orchestration de l'exécution d'une pluralité de mécanismes est configuré pour :
- recevoir au moins une valeur cible d'indicateur de qualité de service ;
- déterminer une stratégie initiale d'orchestration de mécanismes définissant un nombre minimal de mécanismes et un nombre minimal de ressources par noeud, ladite stratégie initiale d'orchestration de mécanismes étant exécutée par ledit un ou plusieurs noeuds ;
- recevoir des données de latence de bout-en-bout;
- déterminer une distribution statistique de la latence de bout-en-bout à partir desdites données ;
- déterminer un nombre de classes d'états du réseau en utilisant ladite distribution statistique de la latence de bout-en-bout ;
- déterminer un seuil temporel et un niveau de confiance en association avec chaque classe d'état du réseau à partir de ladite distribution statistique de la latence de bout-en-bout;
- déterminer une stratégie courante d'orchestration de mécanismes définissant un ensemble de combinaisons de mécanismes et un nombre de ressources en association avec chaque noeud tenant compte dudit nombre de classes d'états du réseau et des seuils temporels associées auxdites classes d'états du réseau et en fonction dudit délai d'exécution de stratégie d'orchestration de mécanismes, ladite stratégie courante d'orchestration de mécanismes étant exécutée par ledit un ou plusieurs noeuds du réseau.

## Patentansprüche

1. Verfahren zum Orchestrieren der Ausführung einer Vielzahl von Mechanismen durch einen oder mehrere Knoten in einem drahtlosen Netz während einer Ausführungszeit der Mechanismen-Orchestrierungsstrategie, **dadurch gekennzeichnet, dass** das Verfahren die folgenden Schritte umfasst:
- Empfangen (200) mindestens eines Zielwertes eines Anzeigers der Dienstgüte,
- Bestimmen (201) einer Anfangsstrategie der Mechanismen-Orchestrierung, die eine Mindestanzahl von Mechanismen und eine Mindestanzahl von Ressourcen pro Knoten definiert;
- Ausführen (202) der Anfangsstrategie der Mechanismen-Orchestrierung durch den einen oder die mehreren Knoten;
- Empfangen (203) von Ende-zu-Ende-Latenzdaten;
- Bestimmen (204) einer statistischen Verteilung der Ende-zu-Ende-Latenz anhand der Daten;
- Bestimmen (205) einer Anzahl von Zustandsklassen des Netzes unter Verwendung der statistischen Verteilung der Ende-zu-Ende-Latenz;
- Bestimmen (206) eines Zeitschwellenwertes und eines Vertrauenskoeffizienten in Verbindung mit jeder Zustandsklasse des Netzes anhand der statistischen Verteilung der Ende-zu-Ende-Latenz;
- Bestimmen (207) einer laufenden Mechanismen-Orchestrierungsstrategie, die eine Kombination von Mechanismen und eine Anzahl von Ressourcen in Verbindung mit jedem Knoten unter Berücksichtigung der Anzahl von Zustandsklassen des Netzes und der Zeitschwellenwerte, die den Zustandsklassen des Netzes zugeordnet sind, und in Abhängigkeit von der Ausführungszeit der Mechanismen-Orchestrierungsstrategie definiert;
- Ausführen (209) der laufenden Mechanismen-Orchestrierungsstrategie durch den einen oder die mehreren Knoten des Netzes unter Berücksichtigung des Kommunikationsstatus eines jeden Knotens.

2. Verfahren nach Anspruch 1, **dadurch gekennzeichnet, dass** die Anfangsstrategie der Mechanismen-Orchestrierung in Abhängigkeit von den Zielwerten von Anzeigern der Dienstgüte definiert wird, die von dem einen oder den mehreren Knoten in dem drahtlosen Netz empfangen werden.

3. Verfahren nach einem der vorhergehenden Ansprüche, **dadurch gekennzeichnet, dass** die Ausführungszeit der Mechanismen-Orchestrierungsstrategie in Abhängigkeit von dem mindestens einen Zielwert eines Anzeigers der Dienstgüte, der von mindestens einem Knoten in dem drahtlosen Netz empfangen wird, vordefiniert wird.

4. Verfahren nach einem der vorhergehenden Ansprüche, **dadurch gekennzeichnet, dass** die Mindestanzahl von Mechanismen mindestens zwei Mechanismen umfasst.

5. Verfahren nach einem der vorhergehenden Ansprüche, **dadurch gekennzeichnet, dass** die Latenzdaten von einer historischen Ende-zu-Ende-Latenzdatenbank geladen werden.

6. Verfahren nach einem der Ansprüche 1 bis 4, **dadurch gekennzeichnet, dass** die Latenzdaten der vergangenen Ausführung mindestens einer Orchestrierungsstrategie entsprechen.

7. Verfahren nach einem der vorhergehenden Ansprüche, **dadurch gekennzeichnet, dass** ein Zeitschwellenwert eine Schätzung der Ende-zu-Ende-Latenz darstellt, wobei der Vertrauenskoeffizient, der einer Zustandsklasse des Netzes zugeordnet ist, der Integration der statistischen Verteilung der Ende-zu-Ende-Latenz unter Berücksichtigung des der Zustandsklasse des Netzes zugeordneten Zeitschwellenwertes entspricht.

8. Verfahren nach einem der vorhergehenden Ansprüche, **dadurch gekennzeichnet, dass** ein Mechanismus einer Mechanismenausführungszeit zugeordnet ist, die die Zeit darstellt, die zum Ausführen des Mechanismus durch einen Knoten des drahtlosen Netzes erforderlich ist, wobei der Schritt (207) des Bestimmens einer laufenden Mechanismen-Orchestrierungsstrategie das Schätzen einer Restzeit der Mechanismenausführung in Abhängigkeit von der Ausführungszeit einer Mechanismen-Orchestrierungsstrategie, Mechanismenausführungszeiten und laufenden Status der Mechanismenausführung umfasst.

9. Verfahren nach einem der vorhergehenden Ansprüche, **dadurch gekennzeichnet, dass** der Schritt (210) des Ausführens der laufenden Mechanismen-Orchestrierungsstrategie durch einen Knoten des drahtlosen Netzes während einer Zeit kürzer als ein Höchstwert der Ende-zu-Ende-Latenz, die dem Knoten zugeordnet ist, die folgenden Schritte umfasst:
- Bestimmen (302) einer laufenden Kombination von Mechanismen und eines laufenden Zeitschwellenwertes in Abhängigkeit von dem laufenden Kommunikationsstatus des Knotens;
- Ausführen (303) der laufenden Kombination von Mechanismen;
- Bestimmen (304) eines laufenden Latenzzählerwertes entsprechend der Ausführung der laufenden Kombination von Mechanismen;
- Vergleichen (305) des laufenden Latenzzählerwertes mit dem laufenden Schwellenwert;
- Vergleichen (307) des Zeitschwellenwertes mit dem Höchstwert der Ende-zu-Ende-Latenz.

10. Verfahren nach einem der vorhergehenden Ansprüche, **dadurch gekennzeichnet, dass** die statistische Verteilung der Ende-zu-Ende-Latenz eine mehrgipflige statistische Verteilung ist.

11. Verfahren nach einem der vorhergehenden Ansprüche, **dadurch gekennzeichnet, dass** ein Anzeiger der Dienstgüte aus einer Gruppe ausgewählt wird, die die Ende-zu-Ende-Latenz in dem drahtlosen Netz und eine Zuverlässigkeitsmetrik umfasst.

12. Verfahren nach einem der vorhergehenden Ansprüche, **dadurch gekennzeichnet, dass** ein Mechanismus einer oder mehreren Diversitätstechniken zugeordnet ist, wobei eine Diversitätstechnik aus einer Gruppe ausgewählt wird, die Techniken der zeitlichen Diversität, Techniken der räumlichen Diversität, Techniken der frequenziellen Diversität, Techniken der Sende- und Empfangsantennenauswahl, Techniken der Zugangstechnologieauswahl und Techniken der Signalverarbeitung, umfassend Codier- und Modulationsalgorithmen und/oder -protokolle, umfasst.

13. Verfahren nach einem der vorhergehenden Ansprüche, **dadurch gekennzeichnet, dass** ein Mechanismus aus einer Gruppe von Mechanismen ausgewählt ist, die Ausbreitungs- und Steuermechanismen des drahtlosen Netzes, Steuer- und Überwachungsmechanismen für Kommunikationsressourcen, die in dem drahtlosen Netz verwendet werden, Synchronisationsmechanismen, Redundanzmechanismen, umfassend Datenretransmissionsmechanismen, Routing- und Verwaltungsmechanismen der Konnektivitäten und Mobilität in dem drahtlosen Netz, Datenspeicherungs- und Verarbeitungsmechanismen, Mechanismen zur Anpassung der physischen Schicht und ihrer Konfigurationen, Frequenzagilitätsmechanismen, Mechanismen, die mit dem Zugang zu und der Planung von Ressourcen verbunden sind, Mechanismen zur Verwaltung der Ressourcenzuweisung, Virtualisierungsmechanismen der Netzfunktionalitäten und Nutzung der Elastizität des Netzes und Mechanismen zur Auswahl von mehreren Strecken umfasst.

14. Vorrichtung zum Orchestrieren der Ausführung einer Vielzahl von Mechanismen durch einen oder mehrere Knoten in einem drahtlosen Netz während einer Ausführungszeit der Mechanismen-Orchestrierungsstrategie, **dadurch gekennzeichnet, dass** die Vorrichtung zum Orchestrieren der Ausführung einer Vielzahl von Mechanismen für Folgendes konfiguriert ist:
- Empfangen mindestens eines Zielwertes eines Anzeigers der Dienstgüte;
- Bestimmen einer Anfangsstrategie der Mechanismen-Orchestrierung, die eine Mindestanzahl von Mechanismen und eine Mindestanzahl von Ressourcen pro Knoten definiert; wobei die Anfangsstrategie der Mechanismen-Orchestrierung durch den einen oder die mehreren Knoten ausgeführt wird;
- Empfangen von Ende-zu-Ende-Latenzdaten;
- Bestimmen einer statistischen Verteilung der Ende-zu-Ende-Latenz anhand der Daten;
- Bestimmen einer Anzahl von Zustandsklassen des Netzes unter Verwendung der statistischen Verteilung der Ende-zu-Ende-Latenz;
- Bestimmen eines Zeitschwellenwertes und eines Vertrauenskoeffizienten in Verbindung mit jeder Zustandsklasse des Netzes anhand der statistischen Verteilung der Ende-zu-Ende-Latenz;
- Bestimmen einer laufenden Mechanismen-Orchestrierungsstrategie, die einen Satz von Kombinationen von Mechanismen und eine Anzahl von Ressourcen in Verbindung mit jedem Knoten unter Berücksichtigung der Anzahl von Zustandsklassen des Netzes und der Zeitschwellenwerte, die den Zustandsklassen des Netzes zugeordnet sind, und in Abhängigkeit von der Ausführungszeit der Mechanismen-Orchestrierungsstrategie definiert; wobei die laufende Mechanismen-Orchestrierungsstrategie durch den einen oder die mehreren Knoten des Netzes ausgeführt wird.

## Claims

1. A method for orchestrating the execution of a plurality of mechanisms by one or more nodes in a wireless network during a time period for executing a mechanism orchestration strategy, **characterised in that** the method comprises the steps of
- receiving (200) at least one target value of a service quality indicator;
- determining (201) an initial strategy for orchestrating mechanisms which define a minimum number of mechanisms and a minimum number of resources per node;
- executing (202) said initial mechanism orchestration strategy by the one or more nodes;
- receiving (203) end-to-end latency data;
- determining (204) a statistical distribution of the end-to-end latency from said data;
- determining (205) a number of state classes of the network using said statistical distribution of the end-to-end latency;
- determining (206) a time threshold and a trust level in association with each state class of the network from said statistical distribution of the end-to-end latency;
- determining (207) a current strategy for orchestrating mechanisms which defines a combination of mechanisms and a number of resources in association with each node taking into account said number of state classes of the network and the time thresholds associated with said state classes of the network and as a function of said time period for executing the mechanism orchestration strategy;
- executing (209) said current mechanism orchestration strategy by means of said one or more nodes of the network, taking into account the communication status of each node.

2. The method according to claim 1, **characterised in that** said initial mechanism orchestration strategy is defined in accordance with the target values of service quality indicators which are received from said one or more nodes in the wireless network.

3. The method according to any one of the preceding claims, **characterised in that** said time period for executing the mechanism orchestration strategy is predefined in accordance with said at least one target value of a service quality indicator received by at least one node in said wireless network.

4. The method according to any one of the preceding claims, **characterised in that** said minimum number of mechanisms comprises at least two mechanisms.

5. The method according to any one of the preceding claims, **characterised in that** said latency data are loaded from a historical end-to-end latency database.

6. The method according to any one of claims 1 to 4, **characterised in that** said latency data correspond to the past execution of at least one orchestration strategy.

7. The method according to any one of the preceding claims, **characterised in that** a time threshold represents an estimation of the end-to-end latency, the trust coefficient associated with a state class of the network corresponding to the integration of the statistical distribution of the end-to-end latency, taking into account the time threshold associated with said state class of the network.

8. The method according to any one of the preceding claims, **characterised in that** a mechanism is associated with a time period for executing the mechanism which represents the time period required for executing said mechanism by a node of said wireless network, the step (207) of determining a current mechanism orchestration strategy comprising the estimation of a time remaining for executing mechanisms in accordance with said time period for executing a mechanism orchestration strategy, mechanism execution time periods and current mechanism execution statuses.

9. The method according to any one of the preceding claims, **characterised in that** the step (210) of executing said current mechanism orchestration strategy by a node of said wireless network during a time period less than a maximum value of end-to-end latency associated with said node comprises the steps of
- determining (302) a current combination of mechanisms and a current time threshold in accordance with the current communication status of said node;
- executing (303) said current combination of mechanisms;
- determining (304) a current latency counter value corresponding to the execution of said current combination of mechanisms;
- comparing (305) said current latency counter value with said current time threshold;
- comparing (307) said current time threshold with said maximum end-to-end latency value.

10. The method according to any one of the preceding claims, **characterised in that** said statistical distribution of the end-to-end latency is a multimodal statistical distribution.

11. The method according to any one of the preceding claims, **characterised in that** a service quality indicator is selected from a group comprising the end-to-end latency in the wireless network and a reliability metric.

12. The method according to any one of the preceding claims, **characterised in that** a mechanism is associated with one or more diversity techniques, a diversity technique being selected from a group comprising time diversity techniques, spatial diversity techniques, frequency diversity techniques, transmitting and receiving antenna selection techniques, access technology selection techniques and signal processing techniques comprising coding and modulation algorithms and/or protocols.

13. The method according to any one of the preceding claims, **characterised in that** a mechanism is selected from a group of mechanisms comprising mechanisms for deployment and control of said wireless network, mechanisms for controlling and monitoring communication resources used in said wireless network, synchronisation mechanisms, redundancy mechanisms comprising data retransmission mechanisms, mechanisms for routing and controlling connectivities and mobility in said wireless network, mechanisms for data storage and data-processing, mechanisms for adapting the physical layer and the configurations thereof, mechanisms for frequency agility, mechanisms linked with access and planning of resources, mechanisms for controlling the allocation of resources, mechanisms for virtualisation of functionalities of the network and using the flexibility of the network, and mechanisms for selecting multiple paths.

14. A device for orchestrating the execution of a plurality of mechanisms by one or more nodes in a wireless network during a time period for executing a mechanism orchestration strategy, **characterised in that** the device for orchestrating the execution of a plurality of mechanisms is configured to:
- receive at least one target value of a service quality indicator;
- determine an initial strategy for orchestrating mechanisms which define a minimum number of mechanisms and a minimum number of resources per node, said initial mechanism orchestration strategy being executed by said one or more nodes;
- receive end-to-end latency data;
- determine a statistical distribution of the end-to-end latency from the data;
- determine a number of classes of states of the network using said statistical distribution of the end-to-end latency;
- determine a time threshold and a trust coefficient in association with each state class of the network from said statistical distribution of the end-to-end latency;
- determine a current strategy for orchestrating mechanisms which defines a group of combinations of mechanisms and a number of resources in association with each node, taking into account said number of state classes of the network and the time thresholds associated with said state classes of the network and as a function of said time period for executing the mechanism orchestration strategy, said current mechanism orchestration strategy being executed by said one or more nodes of the network.
